# FASCICULE DE BREVET EUROPEEN

(11) **EP 0 761 413 B1**
(45) Date de publication et mention de la délivrance du brevet: **28.02.2001**
(21) Numéro de dépôt: 96401799.0
(22) Date de dépôt: 20.08.1996
(51) Int. Cl.: B29C 49/48, B29C 49/42, B29C 49/04

(54) **Procédé de fabrication d'un produit en matière plastique par extrusion-soufflage**
Verfahren zur Herstellung eines Gegenstandes aus Kunststoff durch Blasformen
Method of manufacturing an article made of plastic material by blow moulding

(30) Priorité: 30.08.1995 FR 9510204
(43) Date de publication de la demande: 12.03.1997
(73) Titulaire: HUTCHINSON, 75008 Paris (FR)
(72) Inventeur: Nicolas, Olivier, 45200 Montargis (FR)
(74) Mandataire: Ramey, Daniel

(56) Documents cités:
- DE-U- 8 905 020
- US-A- 3 050 773
- PATENT ABSTRACTS OF JAPAN vol. 008, no. 238 (M-335), 31 Octobre 1984 & JP 59 118435 A (MAZDA KK), 9 Juillet 1984,
- PLASTVERARBEITER, vol. 45, no. 7, Juillet 1994, HEIDELBERG, DE, pages 20-21, XP000460839 "Das besondere Highlight: 3-D-Blasformteile in sequentielle Coextrusion"
- PATENT ABSTRACTS OF JAPAN vol. 008, no. 258 (M-340), 27 Novembre 1984 & JP 59 131431 A (KODAMA JIYUSHI KOGYO KK), 28 Juillet 1984,
- PATENT ABSTRACTS OF JAPAN vol. 010, no. 181 (M-492), 25 Juin 1986 & JP 61 029524 A (NIPPON PLAST CO LTD), 10 Février 1986,
- PATENT ABSTRACTS OF JAPAN vol. 008, no. 284 (M-348), 26 Décembre 1984 & JP 59 152822 A (KIYOORAKU KK), 31 Août 1984,
- DATABASE WPI Derwent Publications Ltd., London, GB; AN 96-146400 XP002001724 & JP 08 034 072 A (INOAC CORP) , 6 Février 1996
- PATENT ABSTRACTS OF JAPAN vol. 011, no. 388 (M-652), 18 Décembre 1987 & JP 62 156924 A (KYORAKU CO LTD), 11 Juillet 1987,
- PATENT ABSTRACTS OF JAPAN vol. 010, no. 257 (M-513), 3 Septembre 1986 & JP 61 083020 A (TSUCHIYA MFG CO LTD), 26 Avril 1986,

## Description

L'invention concerne essentiellement un procédé de fabrication d'un produit en matière plastique par extrusion-soufflage, ainsi que les produits obtenus par exécution de ce procédé, notamment des conduits de passage de fluide.

Les conduits de passage de fluide, par exemple d'air ou de gaz, sont traditionnellement réalisés en caoutchouc par moulage par injection, ce qui permet de leur donner des formes non-rectilignes, ces conduits devant souvent comporter des coudes formés les uns à la suite des autres dans des plans différents. C'est le cas notamment des conduits d'air qui équipent les moteurs à combustion interne des véhicules automobiles et qui relient une entrée d'air à un filtre à air, le filtre à air à un collecteur d'admission ou à un turbo-compresseur, le turbo-compresseur à un échangeur et l'échangeur au moteur.

Ces conduits moulés par injection en caoutchouc ont une épaisseur de paroi relativement importante, par exemple de l'ordre de 4 à 5 mm, et sont donc lourds et onéreux.

On a déjà proposé de les réaliser par extrusion-soufflage en trois dimensions, ce procédé consistant à extruder une paraison en une matière plastique appropriée à l'intérieur d'un moule ouvert, à fermer au moins une partie du moule sur au moins une partie correspondante de la paraison, puis à déplacer au moins une autre partie de la paraison pour donner à celle-ci la forme générale du conduit à réaliser, et à refermer ensuite une autre partie du moule sur cette autre partie de la paraison. Après fermeture complète du moule, on injecte un gaz sous pression dans la paraison pour l'appliquer sur la surface interne du moule puis, après solidification de la matière plastique, on ouvre le moule pour démouler le conduit. On peut ainsi obtenir des conduits présentant des coudes formés dans des plans différents, qui ont une épaisseur nettement plus faible que les conduits traditionnels en caoutchouc de la technique antérieure et qui sont donc beaucoup plus légers et moins coûteux que ces derniers.

Il est ensuite nécessaire, dans de nombreux cas, de rapporter des accessoires sur ces conduits, par exemple pour les équiper de conduits de dérivation, de pattes ou d'autres organes de fixation ou d'accrochage sur un support, ou encore de résonateurs ou de silencieux dans le cas des conduits d'admission d'air pour moteurs, ces opérations de reprise étant longues et onéreuses et nécessitant souvent l'emploi de moyens tels que des colliers de serrage ou analogues, qui doivent être posés à la main par des ouvriers.

L'invention a notamment pour but d'éviter ces inconvénients.

Elle a pour objet un procédé d'extrusion-soufflage permettant de réaliser un produit en matière plastique d'une seule pièce avec un ou des accessoires ou équipements annexes tels par exemple qu'un conduit de dérivation, un résonateur, un silencieux, des pattes ou des organes de fixation, etc.

Elle a également pour objet des produits en matière plastique réalisés par extrusion-soufflage d'une seule pièce avec des accessoires ou équipements annexes du type précité, tels notamment que des conduits d'admission d'air pour des moteurs de véhicules automobiles.

Elle propose, à cet effet, un procédé de fabrication d'un produit en matière plastique par extrusion-soufflage, consistant à extruder une paraison dans un moule ouvert puis, après fermeture du moule, à injecter un gaz sous pression dans la paraison pour l'appliquer sur la surface interne du moule et ensuite à ouvrir le moule pour démouler le produit, le procédé étant caractérisé en ce qu'il consiste à former au moins un accessoire d'une pièce sur ce produit au cours de sa fabrication par des opérations consistant à ouvrir ou à laisser ouverte une partie du moule à l'endroit où l'on veut former un accessoire précité, à injecter une première fois du gaz sous pression dans la paraison pour former par soufflage une extension de la paraison à cet endroit, puis à fermer le moule sur la paraison et son extension et à donner leur forme définitive à la paraison et à son extension par une seconde injection de gaz sous pression dans la paraison.

Le soufflage est donc réalisé en deux temps dans le procédé selon l'invention, le premier temps permettant de réaliser une extension de la paraison à l'emplacement prévu de l'accessoire à réaliser, le second temps permettant de donner à la paraison et à son extension leur forme définitive correspondant à celles du produit et de l'accessoire à réaliser.

Le produit et son ou ses accessoires sont ainsi réalisés d'une seule pièce, de façon simple, rapide et économique.

Selon d'autres caractéristiques de l'invention, l'extension précitée de la paraison a une forme initiale de bourrelet en saillie sur la périphérie de la paraison, ce bourrelet s'étendant autour de l'axe de la paraison sur 360° ou moins ou le long de la paraison.

Le procédé consiste ensuite à écraser une partie de ce bourrelet à la fermeture du moule, notamment pour donner une forme tubulaire à l'extension de la paraison.

On peut profiter de cet écrasement du bourrelet dû à la fermeture du moule pour former un voile de liaison et/ou au moins une communication entre le produit et l'accessoire et éventuellement pour former simultanément dans ce voile au moins un autre accessoire tel par exemple qu'une patte de fixation ou d'accrochage, ou une rainure ou un canal de guidage de câbles ou analogues.

Selon une autre caractéristique particulièrement avantageuse de l'invention, la paraison précitée comporte au moins deux matières plastiques différentes, l'une de type souple et l'autre de type rigide, qui sont extrudées successivement.

Dans une application particulière de l'invention à la fabrication de conduits d'admission d'air pour moteurs de véhicules automobiles, l'accessoire formé d'une pièce avec le conduit peut être un silencieux ou un résonateur de Helmholtz ou un résonateur quart d'onde, s'étendant par exemple autour de l'axe du conduit ou le long de ce conduit et communiquant avec celui-ci par au moins un tronçon de tube sensiblement radial par rapport à l'axe du conduit ou par un ou des orifices de la paroi du conduit.

Le silencieux ou le résonateur est formé avantageusement sur une partie de la paraison qui est en matière de type rigide.

De plus, il est de préférence formé au voisinage d'une extrémité du conduit, ce qui permet d'éviter une trop grande complexité du moule de fabrication du conduit et de son accessoire.

De façon générale, l'invention apporte un gain de temps et une économie appréciables dans la fabrication de produits tels que des conduits d'admission d'air pour moteur de véhicule et en général de produits réalisés en matière plastique par extrusion-soufflage et auxquels sont associés des accessoires ou équipements annexes.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique d'une partie d'une machine d'extrusion-soufflage pour l'exécution du procédé selon l'invention ;
- la figure 2 représente schématiquement une paraison dans un moule d'extrusion-soufflage à trois dimensions ;
- les figures 3 et 4 sont des vues partielles agrandies de la paraison, illustrant des opérations essentielles du procédé selon l'invention ;
- la figure 5 est une vue schématique en coupe transversale de la partie de conduit obtenue en figure 4 ;
- les figures 6 et 7 sont des vues schématiques en coupe axiale et en coupe transversale d'une variante de réalisation.

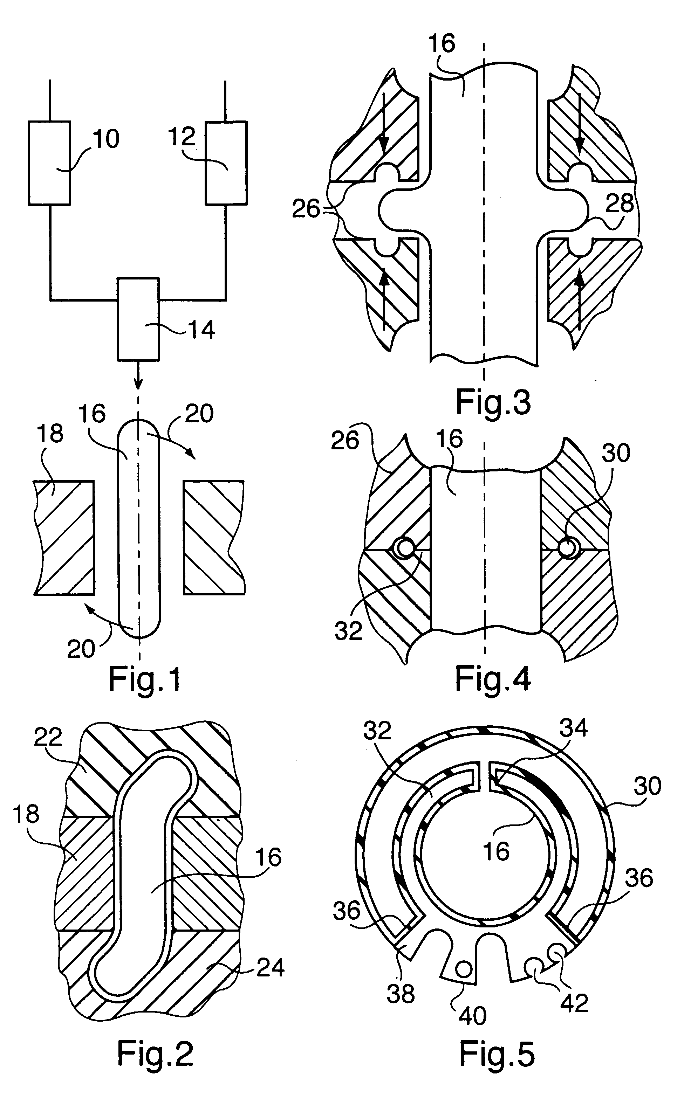

On a représenté schématiquement en figure 1 certains composants essentiels d'une machine d'extrusion-soufflage permettant la fabrication de conduits en matière plastique comportant des coudes ou des parties de conduits s'étendant dans des plans différents.

Dans l'exemple de la figure 1, cette machine d'extrusion-soufflage est du type bi-matière et comprend deux extrudeuses 10, 12 en parallèle raccordées à une tête d'extrusion 14 pour la formation d'une paraison tubulaire 16 dont une partie est en une matière fournie par l'extrudeuse 10 et une autre partie en une matière fournie par l'extrudeuse 12. Par exemple, l'extrudeuse 10 peut alimenter la tête 14 en une matière du type rigide après solidification, tandis que l'extrudeuse 12 alimente la tête 14 en une matière du type souple après solidification. Les matières qui sont extrudées successivement dans la tête 14 doivent être compatibles entre elles et avoir une consistance suffisante à l'état fondu pour que la paraison 16 ne "coule" pas à l'extrémité inférieure de la tête 14 et conserve sa forme.

De façon classique, la paraison 16 en sortie de la tête 14 est extrudée à l'intérieur d'un moule ouvert dont seule la partie médiane 18 a été représentée en figure 1. Cette partie médiane 18 du moule correspond à une partie médiane rectiligne du conduit à réaliser et peut être refermée sur la partie médiane correspondante de la paraison 16.

La machine comprend des manipulateurs (non représentés) qui reçoivent les extrémités supérieure et inférieure de la paraison 16 pour les déplacer par exemple dans les directions indiquées par les flèches 20 et donner à la paraison une forme correspondant à la forme générale du conduit à réaliser, cette forme étant approximativement en S dans l'exemple représenté, les extrémités coudées de la paraison pouvant être dans un même plan par rapport à la partie médiane de la paraison ou dans des plans différents.

On referme ensuite les parties supérieure 22 et inférieure 24 du moule sur les extrémités de la paraison, comme représenté schématiquement en figure 2.

La technique connue d'extrusion-soufflage consiste ensuite à injecter un gaz sous pression à l'intérieur de la paraison 16 contenue dans le moule fermé, pour appliquer la matière de la paraison sur la surface interne du moule et donner à la paraison une forme finale correspondant à celle du produit à réaliser.

Après refroidissement et solidification de la matière plastique, on ouvre le moule pour démouler le produit.

L'invention diffère de cette technique connue en ce que, avant l'injection du gaz sous pression à l'intérieur de la paraison, elle consiste à ouvrir ou à laisser ouverte une partie 26 du moule à l'emplacement de l'accessoire à former, le reste du moule étant refermé sur la paraison 16, puis à injecter à l'intérieur de la paraison un gaz à une pression déterminée pendant une durée déterminée pour former par gonflement de la paraison une extension de celle-ci qui sera ensuite utilisée pour la formation de l'accessoire.

Comme représenté en figure 3, cette extension peut avoir la forme d'un bourrelet annulaire 28 formé en saillie sur le pourtour de la paraison 16 tout autour de l'axe de celle-ci.

On peut aussi, si on le souhaite, donner une forme différente à cette extension, par exemple en ne la laissant se former que sur une partie de la circonférence de la paraison et/ou en faisant varier ses dimensions autour de l'axe de la paraison et/ou le long de cet axe.

L'opération suivante consiste, comme représenté schématiquement en figure 4, à refermer le moule sur la paraison 16 et son extension 28 de façon à écraser une partie du bourrelet annulaire précité pour donner à l'extension de la paraison une forme tubulaire sensiblement torique 30 qui est rattachée à la paraison 16 par un voile annulaire 32, la partie 26 du moule refermée sur le bourrelet annulaire 28 délimitant un volume torique à la forme du ou des accessoires à réaliser ainsi qu'un passage radial ou sensiblement radial permettant de former au moins un tube cylindrique radial 34 de communication entre l'extension torique 30 et la paraison 16.

Comme on le voit également en figure 5, la fermeture du moule peut provoquer l'écrasement du bourrelet annulaire 28 sur une certaine étendue angulaire, par exemple à l'opposé du tube de communication 34, de telle sorte que l'extension torique 30 comprend deux extrémités fermées 36 écartées l'une de l'autre et reliées par un voile 38 de matière, rattaché au voile 32 formé entre l'extension torique et la paraison 16.

On peut profiter de l'écrasement de la matière résultant de la fermeture du moule pour former dans ce voile 38 une ou plusieurs pattes de fixation 40 et une ou plusieurs rainures de guidage ou de réception de câbles ou analogues, ou d'autres accessoires ou équipements.

Ensuite, par injection de gaz sous pression à l'intérieur de la paraison, on applique la matière plastique sur la surface intérieure du moule et on donne à la paraison et à son extension les formes du conduit et de l'accessoire à réaliser. Après refroidissement et solidification de la matière, on ouvre le moule pour le démoulage du conduit muni de son accessoire. Le conduit ainsi réalisé est fermé à ses extrémités. Il suffit de les couper pour obtenir le conduit proprement dit.

L'extension torique 30 de la paraison, qui est représentée en figure 5, peut constituer un résonateur, du type résonateur de Helmholtz ou un résonateur quart d'onde, ou encore un conduit de dérivation, selon que l'extension torique 30 s'étend des deux côté du tube cylindrique 34 de communication avec l'intérieur du conduit 16.

Lorsque cette extension torique 30 et le tube 34 sont destinés à former un résonateur permettant d'absorber une énergie acoustique à une fréquence donnée, leurs dimensions sont déterminées en fonction de la fréquence à absorber, notamment la longueur de l'extension torique 30, son diamètre ou ses dimensions transversales et celles du tube de communication 34.

On peut également, en variante, ne pas écraser à la fermeture du moule la partie du bourrelet annulaire 28 qui correspond au voile 38 précité, pour former un résonateur qui s'étend sur 360° autour de l'axe du conduit.

On peut donner une section quelconque à l'extension torique 30 précitée.

Pour réduire les pertes de matière et diminuer le coût des conduits selon l'invention, on cherche à réduire autant que possible l'étendue radiale du voile annulaire 32 qui est formé entre le conduit et l'accessoire.

Pour conserver une épaisseur de matière aussi uniforme que possible le long du conduit et au niveau de l'accessoire réalisé d'une pièce avec le conduit, on peut commander la tête d'extrusion 14 pour augmenter l'épaisseur de la paraison dans la zone où le bourrelet annulaire 28 puis l'extension torique 30 seront formés.

On peut également, à partir du bourrelet annulaire 28, ou d'une partie de celui-ci, former un accessoire autre qu'un résonateur, un conduit de dérivation ou un moyen de fixation ou d'accrochage.

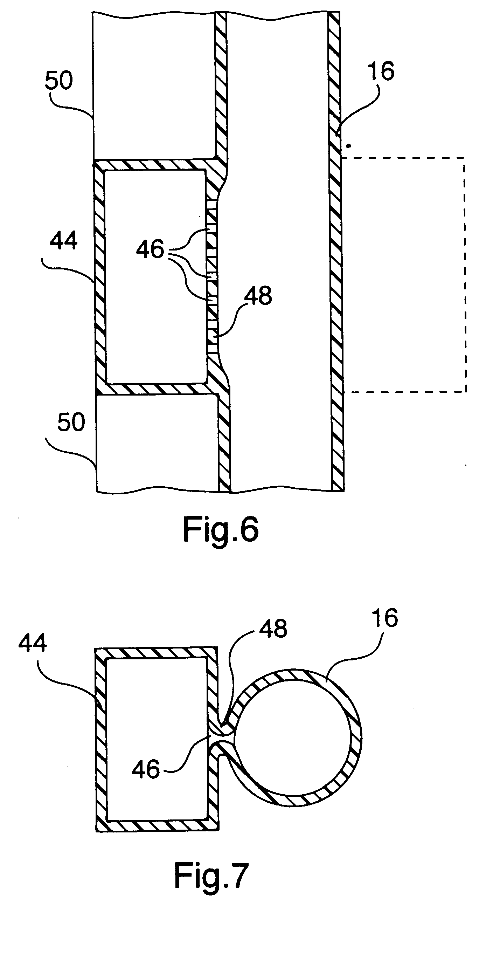

Dans la variante de réalisation des figures 6 et 7, l'accessoire formé sur le conduit 16 est un silencieux 44 qui communique avec l'intérieur du conduit 16 par une série d'orifices 46 formés dans la paroi 48 séparant l'intérieur du conduit de l'extérieur du silencieux, ces orifices 46 étant alignés les uns avec les autres parallèlement à l'axe du conduit 16.

Le conduit 16 et son silencieux 44 sont formés par le procédé qui vient d'être décrit, consistant à obtenir d'abord, par soufflage, une extension de la paraison au niveau de l'emplacement du silencieux, puis à refermer le moule sur cette extension pour obtenir, par écrasement, la paroi 48 avec les orifices 46 (ou les ébauches des orifices 46), et à donner leur forme définitive au conduit 16 et au silencieux 44 par un second soufflage.

Comme on l'a représenté en figure 6, le silencieux 44 est relié au conduit 16 par un voile 50 que l'on peut éliminer ultérieurement par découpe.

On peut réduire l'étendue de ce voile 50 si on utilise deux extrudeuses, l'une pour l'extrusion de la partie du conduit 16 ne comprenant pas le silencieux 44, l'autre pour l'extrusion de la partie du conduit comportant le silencieux, cette seconde extrudeuse ayant avantageusement un diamètre de sortie de matière plus important que celui de la première extrudeuse.

On peut aussi, comme représenté schématiquement en pointillés sur la figure 6, former deux silencieux 44 sur le conduit 16, par exemple symétriques par rapport à l'axe du conduit.

De façon générale, l'invention est applicable à la fabrication de produits quelconques en matière plastique, dès lors que ces produits sont réalisables par extrusion-soufflage.

## Revendications

1. Procédé de fabrication d'un produit en matière plastique par extrusion-soufflage, tel par exemple qu'un conduit de passage de fluide pour véhicule automobile, consistant à extruder une paraison dans un moule ouvert puis, après fermeture du moule, à injecter un gaz sous pression dans la paraison pour l'appliquer sur la surface intérieure du moule et ensuite à ouvrir le moule pour démouler le produit, caractérisé en ce qu'il consiste à former au moins un accessoire d'une pièce sur ce produit au cours de sa fabrication par des opérations consistant à ouvrir ou à laisser ouverte une partie de moule à l'endroit où l'on veut former un accessoire précité, à injecter une première fois du gaz sous pression dans la paraison pour former par soufflage une extension de la paraison à cet endroit, puis à fermer le moule sur la paraison et son extension et à donner leur forme définitive à la paraison et à l'extension précitée par une seconde injection de gaz sous pression dans la paraison.

2. Procédé selon la revendication 1, caractérisé en ce que ladite extension de la paraison a une forme initiale de bourrelet en saillie sur la paraison.

3. Procédé selon la revendication 2, caractérisé en ce que ledit bourrelet s'étend autour de l'axe de la paraison sur 360° ou moins ou le long de la paraison.

4. Procédé selon la revendication 2 ou 3, caractérisé en ce qu'il consiste, après formation dudit bourrelet, à en écraser une partie à la fermeture du moule, pour donner une forme souhaitée, par exemple tubulaire à ladite extension de la paraison.

5. Procédé selon la revendication 4, caractérisé en ce qu'il consiste, par écrasement du bourrelet à la fermeture du moule, à former également un voile de liaison et/ou au moins un orifice de communication entre la paraison et ladite extension.

6. Procédé selon la revendication 5, caractérisé en ce qu'il consiste à former dans ce voile, au cours de l'écrasement du bourrelet à la fermeture du moule, au moins un autre accessoire tel par exemple qu'une patte de fixation ou une ou plusieurs rainures de guidage de câbles ou analogues.

7. Procédé selon l'une des revendications précédentes, caractérisé en ce que la paraison comprend au moins deux matières plastiques différentes, l'une de type souple et l'autre de type rigide, qui sont extrudées successivement.

8. Procédé selon l'une des revendications précédentes, caractérisé en ce que le produit est un conduit d'admission d'air pour moteur et ledit accessoire est un silencieux, un résonateur de Helmholtz ou un résonateur quart d'onde s'étendant autour de l'axe du conduit ou le long de ce conduit et communiquant avec celui-ci par au moins un tube ou orifice sensiblement radial par rapport à l'axe du conduit.

9. Procédé selon la revendication 8, caractérisé en ce que ledit silencieux ou résonateur est formé sur une partie de la paraison qui est en matière du type rigide.

10. Procédé selon la revendication 8 ou 9, caractérisé en ce que le silencieux ou résonateur est formé au voisinage d'une extrémité du conduit.

11. Procédé selon une des revendications 1 à 7, caractérisé en ce que ledit accessoire est un conduit de dérivation.

## Patentansprüche

1. Verfahren zur Herstellung eines Produktes aus Kunststoff durch Extrusionsblasen, wie beispielsweise einer Leitung für das Durchfließen eines Fluids für ein Kraftfahrzeug, darin bestehend, einen Vorformling in einer offenen Form zu extrudieren, sodann nach dem Schließen der Form ein Gas unter Druck in den Vorformling einzuspritzen, um ihn an die Innenfläche der Form anzudrücken, und sodann die Form zu öffnen, um das Produkt zu entformen, dadurch gekennzeichnet, daß es darin besteht, mindestens ein Zubehör eines Teils auf diesem Produkt während seiner Herstellung durch Verfahren zu formen, die darin bestehen, einen Teil der Form an der Stelle, an der ein vorgenanntes Zubehör geformt werden soll, zu öffnen oder offen zu lassen, ein erstes Mal Gas unter Druck in den Vorformling einzuspritzen, um durch Blasen eine Erweiterung des Vorformlings an dieser Stelle zu bilden, sodann die Form auf dem Vorformling und seiner Erweiterung zu schließen und dem Vorformling und der vorgenannten Erweiterung ihre endgültige Form durch ein zweites Einspritzen von Gas unter Druck in den Vorformling zu verleihen.

2. Verfahren nach Anspruch 1, dadurch gekennzeichnet, daß die Erweiterung des Vorformlings eine ursprüngliche Wulstform aufweist, die auf dem Vorformling vorspringt.

3. Verfahren nach Anspruch 2, dadurch gekennzeichnet, daß sich dieser Wulst um die Achse des Vorformlings über mindestens 360° oder entlang des Vorformlings erstreckt.

4. Verfahren nach Anspruch 2 oder 3, dadurch gekennzeichnet, daß es darin besteht, nach der Bildung des Wulstes einen Teil davon beim Schließen der Form zusammenzudrücken, um der Erweiterung des Vorformlings eine gewünschte Form, beispielsweise Röhrenform, zu verleihen.

5. Verfahren nach Anspruch 4, dadurch gekennzeichnet, daß es darin besteht, durch Zusammendrücken des Wulstes beim Schließen der Form auch einen Verbindungsschleier und/oder mindestens eine Verbindungsöffnung zwischen dem Vorformling und der Erweiterung zu bilden.

6. Verfahren nach Anspruch 5, dadurch gekennzeichnet, daß es darin besteht, in diesem Schleier während des Zusammendrückens des Wulstes beim Schließen der Form mindestens ein weiteres Zubehör, wie beispielsweise ein Befestigungseisen oder eine oder mehrere Führungsrillen für Kabel oder dergleichen zu bilden.

7. Verfahren nach einem der vorhergehenden Ansprüche, dadurch gekennzeichnet, daß der Vorformling mindestens zwei unterschiedliche Kunststoffe umfaßt, einen weichen und einen harten, die nacheinander extrudiert werden.

8. Verfahren nach einem der vorhergehenden Ansprüche, dadurch gekennzeichnet, daß das Produkt eine Luftzuleitung für einen Motor und das Zubehör ein Dämpfer, ein Helmholtz-Resonator oder ein Viertelwellenresonator ist, der sich um die Achse der Leitung oder entlang dieser Leitung erstreckt und mit dieser durch mindestens ein Rohr oder eine Öffnung in Verbindung steht, die im wesentlichen in bezug auf die Achse der Leitung radial sind.

9. Verfahren nach Anspruch 8, dadurch gekennzeichnet, daß der Dämpfer oder Resonator auf einem Teil des Vorformlings gebildet wird, der aus einem harten Material besteht.

10. Verfahren nach Anspruch 8 oder 9, dadurch gekennzeichnet, daß der Dämpfer oder Resonator in der Nähe eines Endes der Leitung gebildet wird.

11. Verfahren nach einem der Ansprüche 1 bis 7, dadurch gekennzeichnet, daß das Zubehör eine Abzweigungsleitung ist.

## Claims

1. A method of manufacturing a plastics material product by extrusion blow-molding, e.g. a fluid flow duct for a motor vehicle, the method consisting in extruding a parison into an open mold and then, after closing the mold, in injecting a gas under pressure into the parison to press it against the inside surface of the mold, and then in opening the mold to unmold the product, the method being characterized in that it consists in forming at least one accessory integrally on the product while it is being made, such an accessory being formed by the operations consisting in opening or leaving open a portion of the mold at the location where it is to be formed, in injecting gas under pressure on a first occasion into the parison to form an extension of the parison at this location by blowing, in closing the mold onto the parison and its extension, and then in imparting their final shapes to the parison and to the said extension by injecting gas under pressure into the parison for a second time.

2. A method according to claim 1, characterized in that said extension from the parison is initially in the form of a bulge projecting from the parison.

3. A method according to claim 2, characterized in that said bulge extends along the parison or around the axis of the parison over 360° or less.

4. A method according to claim 2 or 3, characterized in that, after forming said bulge, it consists in flattening a portion on closing the mold, so as to give a desired shape, e.g. a tubular shape to said extension of the parison.

5. A method according to claim 4, characterized in that it also consists in forming a connection web and/or at least one communication orifice between the parison and said extension by flattening the bulge when closing the mold.

6. A method according to claim 5, characterized in that it consists in forming at least one accessory in the web while flattening the bulge on closing the mold, such as a fixing tab or one or more grooves for guiding cables or the like, for example.

7. A method according to any preceding claim, characterized in that the parison comprises at least two different plastics materials, one of a flexible type and the other of a rigid type, which materials are extruded in succession.

8. A method according to any preceding claim, characterized in that the product is an air admission duct for an engine and said accessory is a silencer, a Helmholtz resonator, or a quarter-wave resonator extending around the axis of the duct or along said duct and communicating therewith via at least one tube or orifice that is substantially radial relative to the axis of the duct.

9. A method according to claim 8, characterized in that said silencer or resonator is made on a portion of the parison which is of rigid type material.

10. A method according to claim 8 or 9, characterized in that the silencer or resonator is formed in the vicinity of one end of the duct.

11. A method according to any one of claims 1 to 7, characterized in that said accessory is a bypass duct.
